# EUROPÄISCHE PATENTSCHRIFT

(11) **EP 2 682 776 B1**
(45) Veröffentlichungstag und Bekanntmachung des Hinweises auf die Patenterteilung: **28.06.2017**
(21) Anmeldenummer: 12005053.9
(22) Anmeldetag: 07.07.2012
(51) Int. Cl.: G01S 3/784, G01S 7/48, G01S 7/486

(54) **Verfahren zur Detektion von gepulster Laserstrahlung sowie bildgebender Laserwarner**
Method for detecting pulsed laser radiation and imaging laser detector
Procédé de détection d'un rayonnement laser pulsé ainsi qu'avertisseur laser imagé

(43) Veröffentlichungstag der Anmeldung: 08.01.2014
(73) Patentinhaber: Airbus DS Electronics and Border Security GmbH, 82024 Taufkirchen (DE)
(72) Erfinder: Scherbarth, Stefan, Dr., 88677 Markdorf (DE); Rudow, Oliver, Dr., 80634 München (DE)
(74) Vertreter: LifeTech IP Spies & Behrndt Patentanwälte PartG mbB

(56) Entgegenhaltungen:
- GB-A- 2 122 833
- US-A- 6 137 566

## Beschreibung

Die Erfindung betrifft ein Verfahren zur Detektion von gepulster Laserstrahlung sowie einen dieses Verfahren implementierenden bildgebenden Laserwarner. Das Verfahren und der entsprechende Laserwarner dienen zur Detektion und zweidimensionalen Richtungsbestimmung einfallender, gepulster Laserstrahlung, insbesondere solcher mit geringer Intensität, die zum Beispiel von Lenklasern in lasergesteuerten Lenkflugkörpern (Beamrider-Lenkflugkörper) verursacht werden kann.

Beamrider-Lenkflugkörper stellen eine hohe militärische Bedrohung dar. Sie können prinzipiell an Hand des Lenklasers frühzeitig detektiert werden. Dies wird jedoch auf Grund der sehr geringen am Target eintreffenden Laserpulsenergie in der Größenordnung von einigen fJ/cm² sehr erschwert, welche zumindest tagsüber häufig völlig von der Umgebungshelligkeit überdeckt wird. Neben der frühzeitigen Detektion ist auch die möglichst auf ca. ein Grad genaue Bestimmung der Einfallsrichtung in Azimut und Elevation aus welcher die Bedrohung kommt, für mögliche Gegenmaßnahmen wichtig.

Nach dem allgemeinen Stand der Technik werden zur Beamrider Detektion großflächige Photodioden als Detektor verwendet, wobei in der Regel durch die Bauart der Photodioden und durch spezielle elektronische Beschaltung eine hohe Grenzfrequenz der Detektionsbandbreite angestrebt wird. Zur Abdeckung des erforderlichen Gesamdetektionswinkels werden in der Regel mehrere Detektionssektoren - üblicherweise Quadranten - mit jeweils einem Detektor überwacht.

Durch die Großflächigkeit wird hierbei die gesamte auf den Detektor einfallende Signalintensität erhöht. Durch die hohe Grenzfrequenz wird eine möglichst gute Separation des Pulssignals des Lenklasers vom Signal der Hintergrundhelligkeit angestrebt. Da mit der Fläche der Photodioden die Kapazität steigt und daraus folgend die Grenzfrequenz der Detektion sinkt, ist jedoch prinzipbedingt das erzielbare Signal-zu-Untergrund-Verhältnis eines solchen Detektors begrenzt.

Ein weiterer wesentlicher Nachteil dieser Lösung ist, dass keine genaue Richtungsdetektion möglich ist, da die Anzahl von Detektionssektoren zu Begrenzung des technischen Aufwandes klein gehalten wird. Weiterer Nachteil ist, dass die Unterdrückung des Hintergrundsignals nur begrenzt möglich ist, da prinzipbedingt das Hintergrundlicht über den gesamten Detektionssektor eines Detektors akkumuliert wird. Sofern sich die Sonne innerhalb dieses Sektors befindet, ist in der Regel eine Beamrider-Detektion hier kaum oder nur mit stark verringerter Empfindlichkeit möglich.

In einem aus der US 7,683,310 A bekannten Lösungsansatz wird vorgeschlagen, die Richtungsgenauigkeit durch Einsatz eines Arrays aus Detektoren zu erhöhen und gleichzeitig durch den Einsatz mehrere Detektorschichten mit Wellenlängenseparation eine zusätzliche Information zu gewinnen, sowie eine zusätzlich Unterdrückung des Untergrundlichtes zu erreichen. Nachteil ist hier der für eine hohe Winkelauflösung immens anwachsende Aufwand: So wäre für eine Winkelbestimmung auf 1° für einen Halbraum ein Array von ca. 27.000 dieser Detektorelemente erforderlich, jedes wiederum mit mehreren Photodiodenschichten und entsprechender Verstärkerelektronik.

Zur besseren Richtungsbestimmung werden in der US 5,280,167 A die Funktion der Richtungsbestimmung und die der Detektion getrennt. Zur Detektion wird wiederum eine großflächige, über jeweils einen Quadranten detektierende Photodiode eingesetzt. Mit dem von diesem Detektor empfangenen Pulsen wird dann in einer komplexen Logikschaltung (dem "Codebreaker") eine Vorhersage des nächsten eintreffenden Pulses generiert, mit welcher eine Bildverstärkerkamera getriggert wird. Im Bild dieser Bildverstärkerkamera kann dann die Laserbedrohung mit hoher Ortsauflösung sowie - bei korrekter Pulsvorhersage - geringem Untergrundsignal lokalisiert werden. Ein Nachteil dieser Anordnung ist, dass die Detektionsfähigkeit des Photodiodendetektors prinzipiell begrenzt ist, wie schon oben für die Lösung eines großflächigen Detektorelementes beschrieben. Ein weiterer Nachteil ist der hohe Aufwand: Neben dem komplexen Codebreaker wird eine mit einer Verschlusseinrichtung ("Gate") versehene Bildverstärkerkamera benötigt, welche drüber hinaus zur Erzielung hoher Ortsauflösungen nur einen kleinen Sehwinkel hat. Als Abhilfe wird in US 5,280,167 A vorgeschlagen, diese Bildverstärkerkamera auf einen Schwenk-Neigekopf zu setzen. Hierdurch wird wiederum der Aufwand erhöht und es entsteht ein Zeitverzug durch die notwendige Zeit zur Ausrichtung des Schwenk-Neigekopfes. Durch die notwendige Pulsvorhersage ist das Konzept außerdem auf die Detektion von entsprechend vorhersagbaren und in ihrer Charakteristik hierzu ausreichend bekannten Laserbedrohungen beschränkt.

US 6,137,566 beschreibt eine Vorrichtung zum Empfangen von Signalen von einem Photodetektor. Die Vorrichtung weist eine Anzahl von mit dem Photodetektor verbundenen Komparatoren auf. Jeder Komparator vergleicht den Ausgang des Photodetektors mit einem einstellbaren Schwellwert und jeder Schwellwert wird von einem Schwellregler gesteuert, wobei jeder Schwellenwert einem Helligkeitswert entspricht. Ausgänge der Komparatoren sind jeweils mit einem Schieberegister verbunden, wobei jedes Schieberegister ausgeführt ist, den Ausgang seines zugeordneten Komparator mit einer bestimmten Geschwindigkeit zu erfassen. Auf diese Weise wird einstellbare Intensitätsauflösung in gewünschten Bereichen der Helligkeitsintensität ermöglicht.

Der Erfindung liegt die Aufgabe zugrunde, ein Detektionsverfahren zu schaffen, welches eine hohe Empfindlichkeit zur Detektion von Beamrider-Lenklasern auch bei Tageslicht-Hintergrund aufweist, auch unbekannte, nicht vorhersagbare, gepulste Laserbedrohungen detektieren kann, gleichzeitig eine 2-dimensionale Richtungsauflösung der Einfallrichtung der Laserstrahlung von mindestens ca. 1° ermöglicht und eine sofortige Detektion ohne Zeitverzug wie z.B. durch mechanisch nachzuführende Detektoren erzielt.

Diese Aufgabe wird mit dem Verfahren nach Anspruch 1 gelöst. Vorteilhafte Ausführungen der Erfindung sind Gegenstände von Unteransprüchen.

Ein CCD-Sensor zur Verwendung in dem erfindungsgemäßen Verfahren ist Gegenstand von Patentanspruch 8.

Ein bildgebender Laserwarner zur Durchführung des erfindungsgemäßen Verfahrens ist Gegenstand des Anspruchs 9.

Die Erfindung wird anhand eines Ausführungsbeispiels unter Bezugnahme auf eine Fig. näher erläutert. Die Fig. zeigt eine Prinzipskizze zum Aufbau des Empfangsteils eines erfindungsgemäßen Laserwamers 20.

Zur Detektion und Richtungsbestimmung der einfallenden gepulsten Laserstrahlung 10 wird ein CCD-Sensor 1 mit einem Objektiv 2 hoher Lichtstärke, z.B. F1/1.4 in einem klassischen Kameraaufbau verwendet. Gegebenenfalls kann eine spektrale Filterung mit einem entsprechenden Interferenz- oder Farbfilter 3 erfolgen, um eine erste Reduktion der Hintergrundintensität zu erzielen. Um die hohe Momentanintensität des gepulsten Lasers vor dem starken Gleichlichthintergrund des z.B. sonnenbeleuchteten Hintergrundes zu detektieren, sind jedoch übliche CCD-Sensoren nicht geeignet.

Erfindungsgemäß wird ein spezieller CCD-Sensor mit einer ersten, im Folgenden auch "sensornah" genannte Signalverarbeitung verwendet, welcher mit einer hohen Abtastfrequenz jedes Pixel des CCD-Sensors mit einem Schwellwert vergleicht (im Folgenden auch "schnelle Abtastung" genannt).

Die sensornahe Signalverarbeitung kann dabei in einer besonders vorteilhaften Ausführung direkt in dem CCD-Sensor, d.h. direkt on-chip realisiert sein.

Die erfindungsgemäß verwendete Abtastfrequenz muss mindestens hoch genug sein, um eine Sättigung des CCD-Pixelkondensators innerhalb der Abtastperiode zu vermeiden. Hieraus ergibt sich bei Tageslichthintergrund eine Abtastfrequenz von mindestens ca. 100 kHz, das heißt mindestens alle 10 µs wird jedes Pixel des CCD-Sensors ausgelesen und mit einem Schwellwert verglichen.

Dass die erforderlichen hohen Abtastraten mit heutiger CCD-Technologie erzielbar sind, zeigt zum Beispiel die Kamera Fastcam IS-1M der Firma Photron, Inc, San Diego, CA (www.photron.com), welche eine Bildfrequenz von 1 MHz bei einer Auflösung von 312*260 Pixeln aufweist. Die Firma Princeton Scientific Instruments, Inc, New Jersey, USA (www.prinsci.com) bietet mit der Kamera PSI-3 eine CCD Kamera mit 5 MHz Bildfrequenz an. Dass auch noch kürzere Auslesezeiten bis zu 30 ns möglich sind wurde mit einem Prototyp des Fraunhofer IMS (Jahresbericht 2011, Fraunhofer IMS, Seite 47-49). demonstriert.

Hinsichtlich der praktischen Umsetzbarkeit des in der sensornahen Signalverarbeitung vorgesehenen pixelweise Schwellwertvergleichs direkt im CCD-Sensor wird auf das von M. Lehmann et al. demonstrierte "Smart Pixel" Konzept hingewiesen, bei welchem über einen solchen Schwellwertvergleich eine Belichtungssteuerung auf Einzelpixelbasis erfolgt (M. Lehmann et al. , "Smart pixels for Future 3D-TOF sensors, CSEM SA, Photonics Division, Paper ID R28).

Die zu detektierenden gepulsten Laser haben typischerweise eine Pulsdauer im Bereich von einigen 10ns. Daher steigt das resultierende Signal-zu-Hintergrundverhältnis bis zu einer Abtastfrequenz im Bereich von ca. 10 MHz mit der Höhe der Abtastfrequenz. Daher ist es vorteilhaft, die Abtastfrequenz möglichst hoch, vorzugsweise größer als 1 MHz zu wählen.

In der ersten, sensornahen Signalverarbeitung 4 wird nun nur bei Überschreiten des Schwellwertes der Inhalt des Pixels für eine weitere Verarbeitung verwendet. Ein solches, nach dem Schwellwertvergleich über sämtliche Bildpixel vorliegende Bild wird im Folgenden Einzelbild genannt.

Für eine erste Reduktion der Daten werden diese entsprechend der Abtastfrequenz erzeugten Einzelbilddaten über eine Anzahl von n Einzelbildern zu einem Signalbild aggregiert, wobei dies durch Mittelwertbildung oder durch Spitzenwertbestimmung erfolgen kann. Die Anzahl n wird hierbei in Abhängigkeit der gewählten hohen Abtastfrequenz so gewählt, dass eine mit üblicher Bildverarbeitungshardware prozessierbare Bildfrequenz der Signalbilder entsteht. Bei einer schnellen Abtastung mit 100 kHz führt z.B. n=500 zu einer Bildfrequenz der Signalbilder von 200 Hz. Erfolgt die schnelle Abtastung mit 2 MHz führt n=20000 zu einer Signalbildfrequenz von 100 Hz.

Die Signalbilder werden nun entsprechend den in der CCD-Kameratechnik üblichen Verfahren ausgelesen und dienen, über eine geeignete Schnittstelle ausgegeben (analoges Videosignal, Camera Link , GigE, USB, etc.), als Eingangssignal einer weiteren Signalverarbeitung 5. In dieser weiteren Signalverarbeitung werden dann in dem Signalbild die evtl. vorhandenen Signalpixel einer gepulsten Laserquelle identifiziert. Die Einfallsrichtung der Laserstrahlung ergibt sich dabei aus der Position der Signalpixel im Signalbild. Die Prozessierung der Bilddaten in der weiteren Bildverarbeitung 5 kann mit den in der Bildverarbeitungstechnik an sich bekannten Methoden erfolgen, z.B. mit weiterer Schwellwertbildung, geeigneter Rauschfilterung und evtl. zusätzlicher Signaturfilterung (Form, Größe, zeitliche Entwicklung der Signatur der Laserstrahlung im Signalbild).

Die Bildung eines Schwellwertes für den Schwellwertvergleich in der ersten Signalverarbeitung kann während des laufenden Überwachungsvorgangs des Laserwarners erfolgen, so dass eine automatische Adaption an die herrschenden Strahlungsverhältnisse möglich ist.

In einer vorteilhaften Ausführung werden zu diesem Zweck in der weiteren Signalverarbeitung der Signalbilder die bei der schnellen Abtastung zu verwendenden Schwellwerte so festgelegt, dass die Anzahl der nichtleeren Pixel im Signalbild eine vordefinierte Bandbreite nicht übersteigt. Wird diese Bandbreite unterschritten, werden die Schwellwerte für die Ermittlung des nächsten Signalbildes gesenkt, wird sie überschritten werden die Schwellwerte angehoben. Hierdurch wird einerseits erreicht, dass der Detektor immer an der Nachweisgrenze betrieben wird, andererseits wird sichergestellt, dass eine Sättigung des Signalbildes vermieden wird.

Im einfachsten Fall kann für den Schwellwertvergleich der schnellen Abtastung eine globale, für alle Pixel des Bildes gleiche Schwelle verwendet werden.

Besonders vorteilhaft ist es jedoch, hierfür ein Schwellwertbild zu verwenden, so dass entsprechend der Hintergrundhelligkeit der Szene lokal unterschiedliche Schwellwerte zum Einsatz kommen. Diese Schwellwertbild kann in der Bildverarbeitung der Signalbilder (also innerhalb der weiteren Signalverarbeitung) generiert werden, indem z.B. bei lokalen Häufungen von Signalpixeln nur für diesen Teil des Bildes die Schwelle angehoben wird.

Besonders vorteilhaft ist eine Ausführung, bei welcher dieses Schwellwertbild jeweils fortlaufend in der sensornahen Signalverarbeitung durchgeführt wird. Zur Generierung des Schwellwertbilds wird aus mindestens zwei, dem aktuellen Schwellwertvergleich zeitlich vorangehenden Einzelbildern pixelweise der Mittelwert gebildet, welchem ein zusätzlicher positiver Wert aufaddiert wird.

Hierdurch wird erreicht, dass Fehlsignale im Signalbild durch hohe, jedoch bezüglich der schnellen Abtastfrequenz sich nur langsam ändernde Hintergrundhelligkeiten effektiv vermieden werden. Wird zum Beispiel bei einer schnellen Abtastung mit 1 MHz ein über die jeweils 10 vorherigen Abtastungen gemitteltes Bild als Basis für das Schwellwertbild verwendet, so werden im Signalbild nur dann nichtleere Pixel vorhanden sein, wenn innerhalb der Abtastperiode von 1 µs eine signifikante - durch den zusätzlich aufaddierten Wert festgelegte - Änderung der Lichtintensität der Pixel vorlag. Sämtliche langsamer als 10 µs verlaufenden Änderungen werden durch die beschriebene Verwendung des Schwellwertbildes mit hoher Effektivität ausgefiltert. Da sich Intensitäten in natürlichen Szenenhintergründen, wie z.B. Sonnenspiegelungen im Wasser, in der Regel deutlich langsamer ändern, wird somit eine effektive Fehlsignalunterdrückung in der sensornahen Signalverarbeitung erreicht.

Durch die schnelle Abtastung der ersten, sensornahen Signalverarbeitung entstehen extrem hohe Datenraten. Daher ist es vorteilhaft, wie oben beschrieben, diese sensornahe Signalverarbeitung direkt in den CCD-Sensorchip zu integrieren. Dadurch müssen lediglich die mit den (für typische CCD-Kameras) üblichen Datenraten anfallenden Signalbilder aus dem CCD-Sensorchip ausgelesen werden.

Alternativ zu einer Implementierung der sensornahen Signalverarbeitung direkt auf dem CCD-Sensorchip kann die sensornahe Signalverarbeitung auch rein digital auf der Basis von verfügbarer FPGA-Technologie, z.B. von der Firma Xilinx, Inc, San Jose, CA in Verbindung mit einem schnellen Datenlink realisiert werden. In diesem Zusammenhang ist natürlich auch eine Nutzung mehrerer paralleler Datenlinks möglich.

Zusammengefasst nochmals die wesentlichen Vorteile der Erfindung:
- hohe Empfindlichkeit zur Detektion von Beamrider-Lenklasem auch bei Tageslicht-Hintergrund,
- auch unbekannte, nicht vorhersagbare, gepulste Laserbedrohungen können detektiert werden,
- 2-dimensionale Richtungsauflösung der Einfallrichtung der Laserstrahlung von mindestens ca. 1°,
- schnelle Detektion ohne Zeitverzüge wie sie sich z.B. durch mechanisch nachzuführende Detektoren ergeben.

Ein auf der Basis der vorliegenden Erfindung realisierter Laserwarner zeichnet sich insbesondere durch seine kompakte Bauform aus.

### Ausführungsbeispiel

In einem Ausführungsbeispiel wird ein CCD-Sensor mit 256 * 256 Pixel Auflösung und 50 µm Pixelraster verwendet (z.B. ein CMOS-CCD). Mit einem Objektiv von 8 mm Brennweite ergibt sich ein Öffnungswinkel von 92° vertikal und horizontal. Der Detektionswinkel pro Pixel beträgt 0.36°, womit sich die angestrebte Winkelauflösung von besser 1 ° gut erreichen lässt.

Bei einer Öffnung des Objektivs von 1/1.4 sammelt dieses bei einer einfallenden Pulsenergiedichte von 10 fJ/cm² ca. 10⁴ Photonen pro Puls bei einer im nahen Infrarot liegenden Laserwellenlänge. Diese können im ungünstigsten Fall - einer Fokussierung auf die Pixelecken - auf 4 Pixel verteilt werden, womit ca. 2500 Photonen auf ein Pixel entfallen, eine Größenordnung welche mit CCD Sensoren gut detektiert werden kann. Somit wird die angestrebte Detektionsempfindlichkeit erreicht.

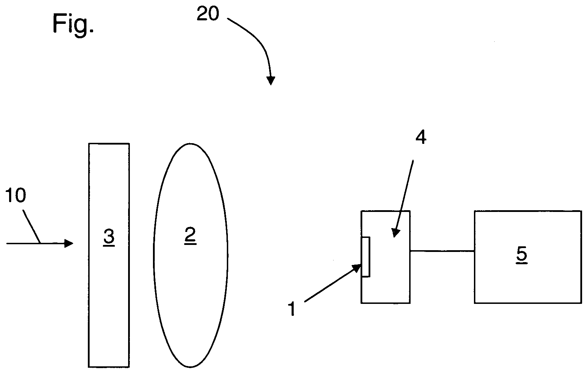

## Patentansprüche

1. Verfahren zur Detektion von gepulster Laserstrahlung (10) mit 2-dimensionaler Auflösung der Einfallsrichtung, **dadurch gekennzeichnet, dass**
- zur Detektion ein CCD-Sensor (1) mit einer abbildenden Optik (2) verwendet wird,
- in einer ersten Signalverarbeitung (4) mit einer Abtastfrequenz von mindestens 100 kHz Einzelbilder erzeugt werden, indem jedes Pixel des CCD-Sensors (1) mindestens alle 10 µs ausgelesen und mit einem Schwellwert verglichen wird und der Pixelwert nur bei Übertreffen des jeweiligen Schwellwerts für die weitere Prozessierung gespeichert wird,
- in der ersten Signalverarbeitung (4) der Mittelwert oder Spitzenwert aus diesen gespeicherten Pixelwerten eines Einzelbilds pixelweise über mindestens 100 Abtastungen ermittelt wird,
- das so in der ersten Signalverarbeitung (4) erhaltene Signalbild mit einer Bildfrequenz von 10 Hz bis 500 Hz einer weiteren Signalverarbeitung (5) bereitgestellt wird,
- in der weiteren Signalverarbeitung (5) aus dem Signalbild das bzw. die die einfallende Laserstrahlung repräsentierenden Signalpixel identifiziert werden, wobei sich die Einfallsrichtung der Laserstrahlung aus der Position der Signalpixel auf dem Signalbild ergibt.

2. Verfahren nach Anspruch 1, wobei der für den aktuellen Schwellwertvergleich innerhalb der ersten Signalverarbeitung (4) zu verwendende Schwellwert in der weiteren Signalverarbeitung (5) fortlaufend aus einem zeitlich vorhergehenden Signalbild abgeleitet wird, wobei der Schwellwert jeweils erhöht bzw. abgesenkt wird, wenn im Signalbild eine festgelegte Spanne von nichtleeren Signalpixeln über- bzw. unterschritten wird.

3. Verfahren nach einem der vorangehenden Ansprüche, wobei für den Schwellwertvergleich in der ersten Signalverarbeitung (4) ein über das gesamte Bild konstanter Schwellwert verwendet wird.

4. Verfahren nach Anspruch 1, wobei für den Schwellwertvergleich in der ersten Signalverarbeitung (4) ein Schwellwertbild mit lokal unterschiedlichen Schwellwerten verwendet wird.

5. Verfahren nach Anspruch 4, wobei das Schwellwertbild fortlaufend in der weiteren Signalverarbeitung (5) gewonnen wird, in dem bei lokalen Häufungen von Signalpixeln im Signalbild nur für diesen Bildbereich der Schwellwert angehoben wird.

6. Verfahren nach Anspruch 4, wobei das Schwellwertbild fortlaufend in der ersten Signalverarbeitung (4) gewonnen wird, in dem aus mindestens zwei, dem aktuellen Schwellwertvergleich zeitlich vorangehenden Einzelbildern der Mittelwert gebildet und ein zusätzlicher positiver Wert aufaddiert wird.

7. Verfahren nach einem der vorangehenden Ansprüche, wobei die erste Signalverarbeitung (4) in dem CCD-Sensor (1) selbst erfolgt, und die Signalbilder aus dem CCD-Sensor (1) ausgelesen werden.

8. CCD-Sensor (1) zur Verwendung in dem Verfahren nach einem der vorangehenden Ansprüche, wobei in ihm die erste Signalverarbeitung (4) gemäß einem der vorangehenden Ansprüche implementiert ist.

9. Bildgebender Laserwarner (20) mit einem CCD-Sensor (1) und einer zugeordneten abbildenden Optik (2), wobei eine erste Signalverarbeitung (4) und eine weitere Bildverarbeitung (5) ausgeführt sind, ein Verfahren nach einem der Ansprüche 1 bis 7 durchzuführen.

## Claims

1. Method for the detection of pulsed laser radiation (10) having two-dimensional resolution of the direction of incidence, **characterized in that**
- a CCD sensor (1) having an imaging optic (2) is used for the detection,
- in a first signal processing (4) having a sampling frequency of at least 100 kHz, single images are generated, by reading out each pixel of the CCD sensor (1) at least every 10 µs and comparing each pixel to a threshold value and by storing the pixel value for further processing only if it exceeds the respective threshold value,
- in the first signal processing (4), the mean value or peak value of these stored pixel values of a single image is ascertained pixel-by-pixel over at least 100 samples,
- the signal image thus obtained in the first signal processing (4) is provided at an image frequency of 10 Hz to 500 Hz to a further signal processing (5),
- in the further signal processing (5), signal pixel(s), which represent(s) the incident laser radiation, is/are identified from the signal image, wherein the direction of incidence of the laser radiation results from the position of the signal pixels on the signal image.

2. Method according to Claim 1, wherein the threshold value to be used for the current threshold value comparison within the first signal processing (4) is continuously derived in the further signal processing (5) from a preceding signal image with respect to time, wherein the threshold value is respectively increased or decreased if a fixed span of non-empty signal pixels is exceeded or undershot in the signal image.

3. Method according to any one of the preceding claims, wherein a threshold value which is constant over the entire image is used for the threshold value comparison in the first signal processing (4).

4. Method according to Claim 1, wherein a threshold value image having locally different threshold values is used for the threshold value comparison in the first signal processing (4).

5. Method according to Claim 4, wherein the threshold value image is continuously obtained in the further signal processing (5), in that in the event of local accumulations of signal pixels in the signal image, the threshold value is only raised for this image region.

6. Method according to Claim 4, wherein the threshold value image is continuously obtained in the first signal processing (4) in that the mean value is formed from at least two single images which precede the current threshold value comparison with respect to time, and an additional positive value is added thereto.

7. Method according to any one of the preceding claims, wherein the first signal processing (4) is performed in the CCD sensor (1) itself, and the signal images are read out from the CCD sensor (1).

8. CCD sensor (1) for use in the method according to any one of the preceding claims, wherein the first signal processing (5) according to one of the preceding claims is implemented therein.

9. Imaging laser alerter (20) having a CCD sensor (1) and an assigned imaging optic (2), wherein a first signal processing (4) and a further image processing (5) are executed, to carry out a method according to any one of Claims 1 to 7.

## Revendications

1. Procédé destiné à la détection d'un faisceau laser (10) pulsé avec la résolution en deux dimensions de la direction d'incidence, **caractérisé en ce que**
- une sonde pour dispositif à transfert de charges (1) comprenant une optique de formation d'images (2) est employée pour la détection ;
- des images individuelles sont créées dans un premier traitement du signal (4) avec une fréquence de balayage d'au moins 100 kHz, en ce sens que chaque pixel de la sonde pour dispositif à transfert de charges (1) est lu au moins une fois toutes les 10 µs et comparé avec une valeur de seuil et la valeur des pixels est uniquement enregistrée en cas de dépassement de la valeur de seuil respective pour l'autre traitement ;
- dans le premier traitement du signal (4), la valeur moyenne ou la valeur de crête est déterminée pixel par pixel par l'intermédiaire d'au moins 100 balayages réalisés à partir de ces valeurs de pixels enregistrées d'une image individuelles;
- l'image du signal ainsi obtenue dans le premier traitement du signal (4) est mise à la disposition d'un autre traitement du signal (5) avec une fréquence d'image comprise entre 10 Hz et 500 Hz ; et
- le ou les pixels du signal représentant le faisceau laser incident sont identifiés dans l'autre traitement du signal (5) réalisé à partir de l'image du signal, selon lequel la direction d'incidence du faisceau laser est obtenue à partir de la position des pixels du signal sur l'image du signal.

2. Procédé selon la revendication 1, selon lequel la valeur de seuil à employer pour la comparaison actuelle de la valeur de seuil au sein du premier traitement du signal (4) est déduite en continu dans l'autre traitement du signal (5) à partir d'une image de signal antérieure dans le temps, selon lequel la valeur de seuil est respectivement augmentée ou diminuée quand une fourchette déterminée de pixels non vides du signal est franchie vers le haut ou vers le bas dans l'image du signal.

3. Procédé selon l'une des revendications précédentes, selon lequel une valeur de seuil constante est employée sur toute l'image pour la comparaison de la valeur de seuil dans le premier traitement du signal (4).

4. Procédé selon la revendication 1, selon lequel une image de la valeur de seuil avec diverses valeurs de seuil au niveau local est employée pour la comparaison de la valeur de seuil dans le premier traitement du signal (4).

5. Procédé selon la revendication 4, selon lequel l'image de la valeur de seuil est acquise en continu dans l'autre traitement du signal (5), en ce sens que la valeur de seuil est augmentée uniquement pour ce champ d'image en cas d'accumulations locales de pixels du signal dans l'image du signal.

6. Procédé selon la revendication 4, selon lequel l'image de la valeur de seuil est acquise en continu dans le premier traitement du signal (4), en ce sens que la valeur moyenne est formée à partir d'au moins deux images individuelles qui sont antérieures dans le temps à la comparaison actuelle de la valeur de seuil et en ce sens qu'une valeur positive supplémentaire est additionnée.

7. Procédé selon l'une des revendications précédentes, selon lequel le premier traitement du signal (4) est réalisé dans la sonde même pour dispositif à transfert de charges (1) et les images du signal sont lues à partir de la sonde pour dispositif à transfert de charges (1).

8. Sonde pour dispositif à transfert de charges (1) destinée à l'utilisation dans le procédé selon l'une des revendications précédentes, selon laquelle le premier traitement du signal (4) est mis en oeuvre dans celle-ci selon l'une des revendications précédentes.

9. Avertisseur laser par imagerie (20) avec une sonde pour dispositif à transfert de charges (1) et une optique de formation d'images (2) qui lui est associée, selon lequel un premier traitement du signal (4) et un autre traitement de l'image (5) sont réalisés en vue de réaliser un procédé selon l'une des revendications 1 à 7.
